# EUROPEAN PATENT SPECIFICATION

(11) **EP 4 397 530 B1**
(45) Date of publication and mention of the grant of the patent: **14.01.2026**
(21) Application number: 22863616.3
(22) Date of filing: 02.09.2022
(51) Int. Cl.: B60L 53/16, H01R 13/639, H01R 13/629, H01R 27/00, H01R 25/00, B60L 53/30, E05B 9/00, E05B 15/00, E05B 15/08, E05B 63/14, H01R 27/02

(54) **ELECTRONIC LOCK, ELECTRIC VEHICLE CHARGING SEAT, AND MOTOR VEHICLE**
ELEKTRONISCHES SCHLOSS, LADESITZ FÜR ELEKTROFAHRZEUG UND KRAFTFAHRZEUG
VERROU ÉLECTRONIQUE, SIÈGE DE CHARGE DE VÉHICULE ÉLECTRIQUE, ET VÉHICULE AUTOMOBILE

(30) Priority: 02.09.2021 CN 202111028847
(43) Date of publication of application: 10.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/116696
(87) International publication number: WO 2023/030482

(56) References cited:
- WO-A1-2015/040154
- CN-A- 109 941 132
- CN-A- 109 941 132
- CN-A- 110 696 657
- CN-A- 113 619 414
- CN-U- 209 556 596
- CN-U- 209 556 596
- CN-U- 210 912 086
- CN-U- 211 693 448
- CN-U- 211 693 448
- CN-U- 215 590 506
- DE-A1- 102010 041 315
- DE-A1- 102010 041 315

## Description

### RELATED APPLICATION

The present disclosure claims priority to Chinese Invention Patent Application No. 202111028847.7 filed on September 2, 2021.

### TECHNICAL FIELD

The present disclosure relates to the technical field of electric automobiles, and particularly to an electronic lock, an electric automobile charging socket, and a motor vehicle.

### BACKGROUND

The battery electric vehicle among the new energy automobiles is an automobile that only uses a battery as an energy storage power source and provides electric energy to an electric motor through the battery to drive the electric motor to run, thereby promoting the automobile to travel. Rechargeable batteries of the battery electric vehicle mainly include a lead-acid battery, a nickel-cadmium battery, a nickel-hydrogen battery, a lithium-ion battery, etc., which can provide power for the electric automobile. Meanwhile, the battery electric vehicle also stores electric energy through the battery to drive the electric motor to run and enable the automobile to travel normally. The battery of the battery electric vehicle is mainly charged by a charging gun of the new energy automobile.

In the existing charging technologies, when multiple charging interfaces, e.g., DC and AC charging interfaces, are distributed in a charging socket, it is possible to use different charging guns for charging. In the existing technical solutions, multiple driving devices are used to respectively control the lock connections between the multiple charging interfaces and the charging guns, and each driving device drives a corresponding lock rod to lock and connect the charging gun to a corresponding charging socket for charging, which causes the problems of large number of parts of the driving device and high manufacturing cost.

Therefore, in the technical field of new energy automobiles, there is an urgent need for a linkage device for synchronously controlling multiple lock rods, in which one driving device can be used to simultaneously control multiple lock rods to lock and connect a charging gun, thereby overcoming the defects of the prior art and solving the problems of large number of parts of the driving device and high manufacturing cost.

Electronic lock or electric automobile charging socket including thereof can be known in the prior art, e.g. from CN109941132A, CN209556596U and CN211693448U.

### SUMMARY

The embodiments of the present disclosure provide an electronic lock, an electric automobile charging socket and a motor vehicle, so as to solve the problem that the existing electronic lock can only be used to lock an AC charging gun or a DC charging gun.

The embodiments of a first aspect of the present disclosure provide an electronic lock, including: a driving device configured to generate a rotational movement; a first lock rod connected to the driving device through a first transmission mechanism, the first transmission mechanism being configured to convert the rotational movement of the driving device into a movement of the first lock rod; and a second lock rod connected to the driving device through a second transmission mechanism, the second transmission mechanism being configured to convert the rotational movement of the driving device into a movement of the second lock rod.

The embodiments of a second aspect of the present disclosure provide an electric automobile charging socket, including the electronic lock according to the embodiments of the first aspect, in which one of the first lock rod and the second lock rod is used for locking a DC charging gun and the other is used for locking an AC charging gun.

The embodiments of a third aspect of the present disclosure provide a motor vehicle, including the electronic lock according to the embodiments of the first aspect.

The electronic lock, the electric automobile charging socket and the motor vehicle have the following characteristics and advantages:
1. According to the embodiments of the present disclosure, since two transmission mechanisms are disposed to be connected to the driving device, only one driving device needs to be provided to drive the two lock rods to linearly move simultaneously, which enables the electronic lock to lock both the DC charging gun and the AC charging gun without increasing the manufacturing cost of the electronic lock; and the electronic lock has a simple structure and is convenient to use.
2. According to the embodiments of the present disclosure, by disposing the reduction mechanism, the torque can be increased to provide an enough driving force to drive the first lock rod and the second lock rod to move linearly.
3. According to the embodiments of the present disclosure, the first transmission mechanism is provided as a rack-and-pinion mechanism, and the second transmission mechanism is provided as a cam mechanism, so that the structure is simple and the transmission is stable.
4. According to the embodiments of the present disclosure, by disposing a reversing assembly to connect the first transmission mechanism and the rotating rod, the first lock rod is arranged perpendicular to the rotating rod, and the first lock rod and the rotating rod are spaced apart from each other in spatial positions to avoid any interference between the components.

### BRIEF DESCRIPTION OF DRAWINGS

The drawings are included to provide a further understanding of the embodiments of the present disclosure, and constitute a part of the specification to illustrate the embodiments of the present disclosure, and together with the description, to explain the principles of the present disclosure. Obviously, the drawings described below involve only some embodiments of this disclosure. For those of ordinary skill in the art, other drawings can be derived from these drawings without any inventive efforts. In the drawings:
FIG. 1 illustrates a schematic diagram of an internal structure of an electronic lock according to an embodiment of the present disclosure from a perspective;
FIG. 2 illustrates a schematic diagram of an internal structure of an electronic lock in FIG. 1 from another perspective;
FIG. 3 illustrates a schematic diagram of a connection between a rotating rod and a second gear, and a connection between a cam and a first reversing gear in FIG. 1; and
FIG. 4 illustrates a schematic diagram of a chute in FIG. 1 disposed on a second lock rod.

### DETAILED DESCRIPTION OF EMBODIMENTS

For a clearer understanding of the objectives, technical features and effects of the embodiments of the present disclosure, specific embodiments will now be described with reference to the drawings. The described embodiments are intended only to schematically illustrate and explain this invention and do not limit the scope of the present disclosure.

The adjective or adverbial modifiers 'upper' and 'lower', 'top' and 'bottom', and 'inner' and 'outer' are only used for the convenience of the relative reference among groups of terms, rather than describing any specific directional restriction on the modified terms. In addition, the terms such as 'first' and 'second' are only used for descriptive purposes, and cannot be understood as indicating or implying relative importance or implicitly specifying the number of the indicated technical features. Therefore, a feature defined with 'first', 'second, or the like can explicitly specify or implicitly include one or more of said feature.

In the description of the embodiments of the present disclosure, unless otherwise specified, the term 'connection' should be broadly understood, for example, it may be a fixed connection, a detachable connection, a direct connection, or an indirect connection through an intermediary. For those of ordinary skill in the art, the specific meaning of the above term in this patent can be understood depending on specific situations. The invention is defined in the appended claims.

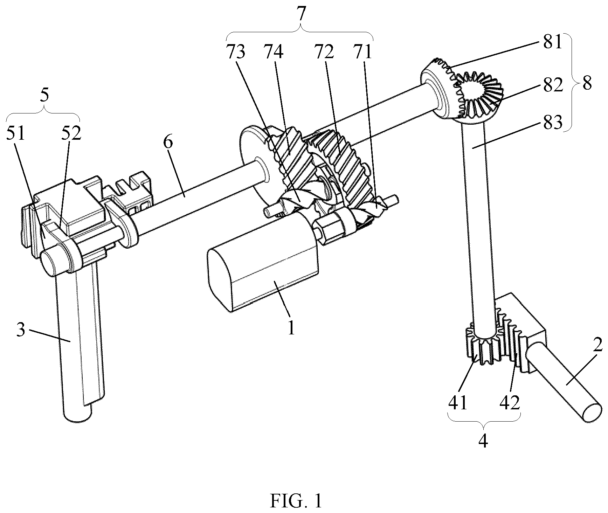

As illustrated in FIG. 1, the embodiments of a first aspect of the present disclosure provide an electronic lock, including a driving device 1, a first lock rod 2 and a second lock rod 3. For example, the first lock rod 2 is used to lock a DC charging gun, the second lock rod 3 is used to lock an AC charging gun, and the driving device 1 is used to generate a rotational movement. The first lock rod 2 is connected to the driving device 1 through a first transmission mechanism 4. The first transmission mechanism 4 is configured to convert the rotational movement of the driving device 1 into a movement (e.g., a linear movement) of the first lock rod 2, so that the first lock rod 2 can complete a locking or unlocking action on the AC charging gun. The second lock rod 3 is connected to the driving device 1 through a second transmission mechanism 5. The second transmission mechanism 5 is configured to convert the rotational movement of the driving device 1 into a movement (e.g., a linear movement) of the second lock rod 3, so that the second lock rod 3 can complete a locking or unlocking action on the AC charging gun.

According to the embodiments of the present disclosure, since two transmission mechanisms are disposed to be connected to the driving device, only one driving device needs to be provided to drive the two lock rods to linearly move simultaneously, which enables the electronic lock to lock both the DC charging gun and the AC charging gun without increasing the manufacturing cost of the electronic lock; and the electronic lock has a simple structure and is convenient to use.

Further, the movement of the first lock rod 2 is in the form of telescoping, translation, rotation, swinging, bending or twisting. The the movement of the second lock rod 3 is in the form of telescoping, translation, rotation, swinging, bending or twisting. The forms of the movements of the two lock rods driven by the driving device 1 can be selected depending on the actual use environment, as long as the two lock rods can be controlled simultaneously.

Further, the first lock rod 2 and the second lock rod 3 are used to be plugged with keyholes of charging guns to fix the charging guns. An important objective of the embodiments of the present disclosure is to lock the charging gun, and each of the lock rods can be plugged into the keyholes of different charging guns for locking, so as to prevent the situation that the charging gun falls off from the charging socket during charging and the charging of the automobile cannot be continued. In addition, the falling off charging gun, which is electriferous, may also cause a risk of electric shock casualties.

Further, a shape of the first lock rod 2 is one or more selected from the group consisting of a circular cylinder, a circular truncated cone, a circular cone, an elliptic cylinder, an elliptic truncated cone, an elliptic cone, a polygonal prism, a polygonal truncated cone and a polygonal cone. A shape of the second lock rod 3 is one or more selected from the group consisting of a circular cylinder, a circular truncated cone, a circular cone, an elliptic cylinder, an elliptic truncated cone, an elliptic cone, a polygonal prism, a polygonal truncated cone and a polygonal cone. In actual use, the shape of the lock rod can be selected according to the shape of the keyhole of the charging gun.

Further, the first lock rod 2 has a length of 5 mm to 55 mm, and the second lock rod 3 has a length of 5 mm to 55 mm.

If the first lock rod 2 and the second lock rod 3 are too short, the locking cannot be completed, and if the first lock rod 2 and the second lock rod 3 are too long, they will interfere with the charging gun to generate abnormal sound. Therefore, the inventor uses the first lock rods 2 with different lengths and the second lock rods 3 with different lengths for tests. It is unqualified if the locking cannot be completed or abnormal sound occurs. The test results are shown in Table 1.

**Table 1: Influence of different lengths of the lock rod on the locking**

| | | | | | | | | | | | | |
|---|---|---|---|---|---|---|---|---|---|---|---|---|
| Length of the lock rod (mm) | 4 | 5 | 8 | 11 | 16 | 21 | 28 | 39 | 47 | 52 | 55 | 56 |
| Whether locking can be completed | No | Yes | Yes | Yes | Yes | Yes | Yes | Yes | Yes | Yes | Yes | Yes |
| Whether abnormal sound occurs | No | No | No | No | No | No | No | No | No | No | No | Yes |

As can be seen from Table 1, when the length of the lock rod is less than 5 mm, the lock rod cannot lock the charging gun, and when the length of the lock rod is greater than 55 mm, the lock rod will interfere with the charging gun and generate abnormal sound. Therefore, the inventor selects the length of the first lock rod 2 to be 5 mm to 55 mm and the length of the second lock rod 3 to be 5 mm to 55 mm.

Further, the first lock rod 2 has a maximum stroke of 5 mm to 36 mm, and the second lock rod 3 has a maximum stroke of 5 mm to 36 mm.

Similarly, if the maximum strokes of the first lock rod 2 and the second lock rod 3 are too short, the first lock rod 2 and the second lock rod 3 cannot lock the charging gun, and if the maximum strokes are too long, the first lock rod 2 and the second lock rod 3 will interfere with the charging gun to generate abnormal sound. Therefore, the inventor selects the first lock rods 2 with different maximum strokes and the second lock rod 3 with different maximum strokes for tests. It is unqualified if the locking cannot be completed or abnormal sound occurs. The test results are shown in Table 2.

**Table 2: Influence of different maximum strokes of the lock rod on the locking**

| | | | | | | | | | | | | |
|---|---|---|---|---|---|---|---|---|---|---|---|---|
| Maximum stroke (mm) | 4 | 5 | 8 | 10 | 12 | 15 | 19 | 23 | 28 | 32 | 36 | 38 |
| Whether locking can be completed | No | Yes | Yes | Yes | Yes | Yes | Yes | Yes | Yes | Yes | Yes | Yes |
| Whether abnormal sound occurs | No | No | No | No | No | No | No | No | No | No | No | Yes |

As can be seen from Table 2, when the maximum stroke of the lock rod is less than 5 mm, the locking cannot be completed, and when the maximum stroke of the lock rod is greater than 36 mm, abnormal sound will occur. Therefore, the inventor selects the maximum stroke of the first lock rod 2 to be 5 mm to 36 mm and the maximum stroke of the second lock rod 3 to be 5 mm to 36 mm.

In some embodiments, the first transmission mechanism 4 is a rack-and-pinion mechanism, a link mechanism, a cam mechanism or a crank-slider mechanism to convert the rotational movement of the driving device 1 into the linear movement of the first lock rod 2, that is, the movement of the first lock rod 2 is linear in these embodiments.

In some embodiments, the second transmission mechanism 5 is a rack-and-pinion mechanism, a link mechanism, a cam mechanism or a crank-slider mechanism to convert the rotational movement of the driving device 1 into a linear movement of the second lock rod 3, that is, the movement of the second lock rod 3 is linear in these embodiments.

In some embodiments, the second transmission mechanism 5 is a rack-and-pinion mechanism, a link mechanism, a cam mechanism or a crank-slider mechanism to convert the rotational movement of the driving device 1 into a linear movement of the second lock rod 3, that is, the movement of the second lock rod 3 is linear in those embodiments.

According to the invention, as illustrated in FIG. 1, the electronic lock further includes a rotating rod 6, which is connected to the driving device 1, the first transmission mechanism 4 and the second transmission mechanism 5, respectively, so as to transmit the rotational movement of the driving device 1 to the first transmission mechanism 4 and the second transmission mechanism 5. The structure is simple and the assembly is convenient.

Specifically, for example, as illustrated in FIG. 1, two ends of the rotating rod 6 are connected to the first transmission mechanism 4 and the second transmission mechanism 5 respectively, and a portion of the rotating rod 6 between the two ends thereof is connected to the driving device 1.

In a specific embodiment, as illustrated in FIG. 1, the electronic lock further includes a reduction mechanism 7, through which the rotating rod 6 is connected to the driving device 1. In this embodiment, by disposing the reduction mechanism 7, the torque can be increased to provide an enough driving force to drive the first lock rod 2 and the second lock rod 3 to move linearly.

In an exemplary technical solution, as illustrated in FIG. 1, the reduction mechanism 7 is a two-stage reduction mechanism, which includes a first worm 71 connected to an output shaft of the driving device 1, a first gear 72 meshed with the first worm 71, a second worm 73 connected to an output shaft of the first gear 72, and a second gear 74 meshed with the second worm 73 and coaxially connected to the rotating rod 6. This solution can further increase the torque through a two-stage speed reduction.

However, the present disclosure is not limited thereto. In other embodiments, the two-stage reduction mechanism may also be a gear reduction mechanism with four gears meshed in sequence.

In the example of FIG. 1, in a peripheral direction of the second gear 74, gear teeth are disposed on only a portion of a continuous side surface of the second gear 74, rather than on the whole outer peripheral surface of the second gear 74, the reason for this design is that the first lock rod 2 and the second lock rod 3 only need to move by a limited length, and accordingly, the second gear 74 only needs to rotate forward or backward by a limited angle without being required to rotate by 360°, so it is unnecessary to dispose the gear teeth on the whole outer peripheral surface of the second gear 74. Thus, the structure of the second gear 74 is simplified, which facilitates the processing and reduces the processing cost.

In some embodiments, a transmission ratio between the driving device 1 and the rotating rod 6 is 5/1 to 90/1. If the transmission ratio is too large, more time is required, the control is inaccurate, and abnormal sound may easily occur.

Therefore, the inventor selects different transmission ratios for tests, and observes the number of times of completion of the locking or unlocking action within one minute. It is unqualified if the number of times is less than 40 or abnormal sound occurs. The results are shown in Table 3.

**Table 3: Influence of different transmission ratios on the speed of the electronic lock**

| | | | | | | | | |
|---|---|---|---|---|---|---|---|---|
| Transmission ratio | 4/1 | 5/1 | 8/1 | 28/1 | 42/1 | 78/1 | 90/1 | 95/1 |
| Number of times of completion | 38 | 40 | 47 | 52 | 55 | 58 | 61 | 63 |
| Whether abnormal sound occurs | No | No | No | No | No | No | No | Yes |

As can be seen from Table 3, if the transmission ratio is too small, the number of times of completion of the locking or unlocking action by the electronic lock within one minute is less than 40, which is unqualified. Meanwhile, if the transmission ratio is greater than 90/1, abnormal sound occurs in the electronic lock, which is also unqualified. Therefore, the inventor selects the transmission ratio between the driving device 1 and the rotating rod 6 to be 5/1 to 90/1.

In some embodiments, as illustrated in FIG. 1, the first transmission mechanism 4 is a rack-and-pinion mechanism, which includes a driving gear 41 and a driven rack 42 meshed with each other. The driven rack 42 is connected to the first lock rod 2, the rotating rod 6 transmits the rotational movement of the driving device 1 to the driving gear 41, and the driving gear 41 drives the driven rack 42 by rotation to drive the first lock rod 2 to move linearly. In this embodiment, the rack-and-pinion mechanism is used to transmit power, so that the structure is simple and the transmission is stable.

In this embodiment, further, as illustrated in FIG. 1, the rack-and-pinion mechanism is connected to the rotating rod 6 through a reversing assembly 8. The reversing assembly 8 includes a first reversing gear 81, a second reversing gear 82 and a link 83. The first reversing gear 81 is coaxially connected to the rotating rod 6, and the second reversing gear 82 is perpendicular to and meshed with the first reversing gear 81. For example, both the first reversing gear 81 and the second reversing gear 82 are bevel gears. The second reversing gear 82 is coaxially connected to the driving gear 41 through the link 83. The link 83, the rotating rod 6 and the first lock rod 2 are perpendicular to each other, so that the first lock rod 2 is arranged perpendicular to the rotating rod 6, and the first lock rod 2 and the rotating rod 6 are spaced apart from each other in spatial positions to avoid any interference between the components.

In the example of FIG. 1, the rotating rod 6 is disposed in a left-right direction, the link 83 is disposed in an up-down direction, the first lock rod 2 is disposed in a front-rear direction, the two-stage reduction mechanism 7 is disposed in a front-rear direction, and the driving device 1 is disposed in a left-right direction, so that the spatial arrangements of the components are reasonable. When the driving device 1 rotates forward or backward, the first lock rod 2 moves forward and backward in the front-rear direction.

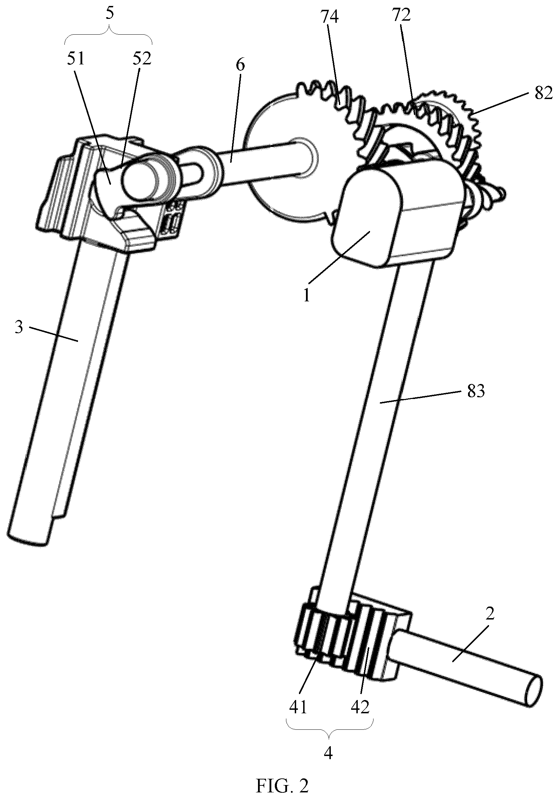

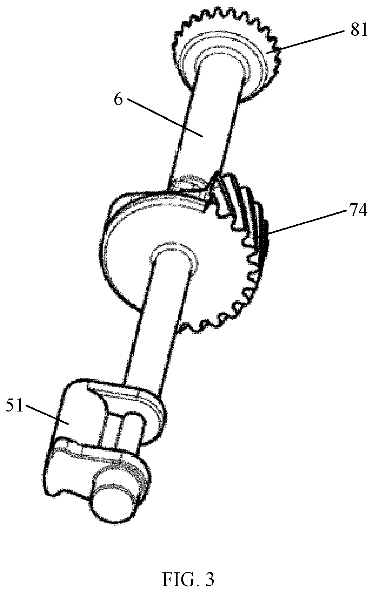

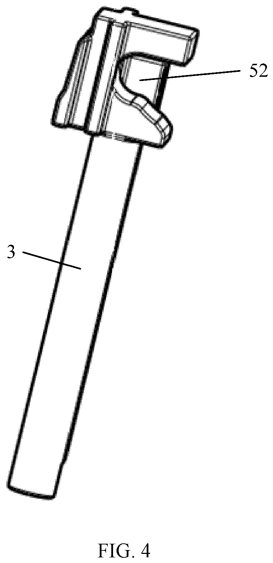

In some embodiments, as illustrated in FIGS. 1 and 2, the second transmission mechanism 5 is a cam mechanism, which includes a cam 51 (as illustrated in FIG. 3) fixed on the rotating rod 6 and a chute 52 (as illustrated in FIG. 4) disposed on the second lock rod 3. The cam 51 is located in the chute 52. Inner wall surfaces of the chute 52 are configured as a slideway with a preset shape and in sliding contact with an outer contour of the cam 51. The rotating rod 6 transmits the rotational movement of the driving device 1 to the cam 51, and the cam 51 is in sliding fit with the slideway by gyration to urge the second lock rod 3 to make a linear movement. In this embodiment, the cam mechanism is used to transmit power, which is simple in structure and convenient in mounting.

In this embodiment, further, the slideway includes two planes, which are located on opposite sides of the cam 51 in a linear movement direction of the second lock rod 3, and are perpendicular to the linear movement direction of the second lock rod 3, respectively, that is, the two planes are parallel to each other. When the cam 51 rotates to be in sliding contact with one of the two planes, it drives the second lock rod 3 to move linearly in a first direction. When the cam 51 rotates to be in sliding contact with the other one of the two planes, it drives the second lock rod 3 to move linearly in a second direction opposite to the first direction.

In the example of FIG. 1, the cam 51 sleeves the outer wall of the rotating rod 6, and the chute 52 on the second lock rod 3 is disposed toward the cam 51 to accommodate the cam 51, and the second lock rod 3 is disposed in the up-down direction. When the driving device 1 rotates forward or backward, the second lock rod 3 moves up and down in the up-down direction.

In this embodiment, further, the preset shape of the slideway is a U-shape, a rectangle, a parallelogram, a polygon, a trapezoid, a rhombus, or an oblong shape. Take the U-shape as an example, that is, the slideway includes two planes and a cambered surface, and the cambered surface serves as a transition surface to connect the two planes, so that the cam 51 can slide continuously between the two planes.

However, the present disclosure is not limited thereto, and the preset shape may also be other shapes. For example, as illustrated in FIG. 4, the slideway includes a plane, a cambered surface and an inclined surface that are connected in sequence, in which the plane is perpendicular to the linear movement direction of the second lock rod 3, and the inclined surface is inclined at a certain angle (e.g., an acute angle) relative to the linear movement direction of the second lock rod 3 and to the plane.

In this embodiment, further, the electronic lock includes a housing (not illustrated) having a first guide hole disposed in a linear movement direction of the first lock rod 2 and a second guide hole disposed in a linear movement direction of the second lock rod 3, the first lock rod 2 passing through the first guide hole, and the second lock rod 3 passing through the second guide hole. The first guide hole can limit the deviation of the first lock rod 2, and the second guide hole can limit the deviation of the second lock rod 3.

In this embodiment, two ends of the rotating rod 6 are connected to the first transmission mechanism 4 and the second transmission mechanism 5 respectively, and a portion of the rotating rod 6 between the two ends thereof is connected to the driving device 1. An output end of the driving device can drive the rotating rod 6 to rotate and further drive the first transmission mechanism 4 and the second transmission mechanism 5 to move.

In some embodiments, as illustrated in FIG. 1, the rotating rod 6, the first lock rod 2 and the second lock rod 3 are perpendicular to each other to avoid an interference when the two lock rods move.

In some embodiments, as illustrated in FIG. 1, the driving device 1 is a rotary electric motor.

In some embodiments, the driving device 1 has an output power of 0.35 W to 5.56 W.

The output power of the driving device 1 determines the working speed of a linkage device, i.e., the larger the power, the faster the linkage device works, and as the power decreases, the linkage device works slower and even the rotation torque of the transmission shaft 20 is insufficient to complete the locking by the first lock rod 2 and the second lock rod 3. In order to test the influence of the output power on the work of the linkage device, the inventor carries out relevant tests. The test method is to select the driving devices 1 with different output power, and the linkage devices of the same structure, wherein each of the driving devices 1 works continuously for one minute, and then the number of times of work completion by the linkage device is recorded. If the number of times is greater than or equal to 40, it is qualified, otherwise it is unqualified. If abnormal sound occurs during the working of the linkage device, it is also unqualified. The results are shown in Table 4.

**Table 4: Influence of different output power on the speed of the linkage device and the abnormal sound**

| | | | | | | | | | | | | | |
|---|---|---|---|---|---|---|---|---|---|---|---|---|---|
| Power (W) | 0.3 | 0.35 | 0.50 | 0.80 | 1.13 | 1.22 | 1.39 | 1.75 | 2.41 | 3.68 | 4.86 | 5.56 | 5.60 |
| Number of times of completion | 38 | 40 | 47 | 52 | 56 | 58 | 61 | 63 | 65 | 67 | 70 | 71 | 71 |
| Whether there is abnormal sound | No | No | No | No | No | No | No | No | No | No | No | Yes | Yes |

As shown in Table 4, when the output power of the driving device 1 is less than 0.35 W, the number of times of locking or unlocking completed by the linkage device is less than 40 within one minute, and the speed is too slow to be qualified, so the inventor selects the minimum power of the driving device 1 to be 0.35 W. When the output power of the driving device 1 is greater than 5.56 W, due to the overall design, the speed of the linkage device enters a bottleneck period without an obvious improvement, and abnormal noise occurs at the same time, so the inventor selects the output power of the driving device 1 to be 0.35 W to 5.56 W. Specifically, the output power may be 0.9 W, 0.96 W, 1 W, or 1.08 W.

In some embodiments, the driving device 1 of the electronic lock has an output torque of 2.25 N·mm to 9.85 N·mm.

The torque of the driving device 1 determines the magnitude of the force applied to the lock rod. Taking the rotary electric motor as an example, if the torque is not enough, the lock rods cannot be driven to complete the locking or unlocking action of the electronic lock. In order to verify the influence of different torques of the rotary electric motor on the locking or unlocking of the electronic lock, the inventor carries out relevant tests. The test method is to select the rotary electric motors with different torques, and the other structures of the electronic lock are the same. It is qualified if the rotary electric motor can normally drive the first transmission mechanism 4 to work, otherwise it is unqualified, and it is also unqualified if abnormal sound occurs in the electronic lock during work. The test results are shown in Table 5.

**Table 5: Whether rotary electric motors with different torques can normally drive the first transmission mechanism 4 to work**

| | | | | | | | | | | | | | |
|---|---|---|---|---|---|---|---|---|---|---|---|---|---|
| Torque (N·mm) | 2.15 | 2.25 | 2.80 | 3.60 | 3.90 | 4.50 | 5.00 | 5.50 | 6.00 | 7.40 | 8.60 | 9.85 | 10 |
| Whether work is possible | No | Yes | Yes | Yes | Yes | Yes | Yes | Yes | Yes | Yes | Yes | Yes | Yes |
| Whether abnormal sound occurs | No | No | No | No | No | No | No | No | No | No | No | No | Yes |

As shown in Table 5, when the torque of the rotary electric motor is less than 2.25 N·mm, the first transmission mechanism 4 cannot be driven to work, so the inventor selects the minimum torque of the rotary electric motor to be 2.25 N·mm. When the torque is greater than 9.85 N·mm, although the first transmission mechanism 4 can be driven to work, abnormal sound is generated when the electronic lock works because the torque is too large, so the inventor selects the torque of the driving device to be 2.25 N·mm to 9.85 N·mm. Specifically, the torque may be 3.50 N·mm or 4.00 N·mm.

In some embodiments, the driving device 1 includes an output shaft, and the rotating rod 6 has a rotation angle of 15° to 92°.

The rotation angle of the rotating rod 6 can also determine the strokes of the first lock rod 2 and the second lock rod 3. When the rotation angle of the rotating rod 6 is too small, the strokes of the first lock rod 2 and the second lock rod 3 are not enough, and the locking cannot be completed. When the rotation angle of the rotating rod 6 is too large, after the first lock rod 2 and the second lock rod 3 extend to the working positions, the rotating rod 6 is still outputting a rotation force, which easily leads to the damage of the linkage device. In order to verify the influence of the rotation angle of the rotating rod 6 on the linkage device, the inventor carries out tests. The test method is to use the drive devices 1 with the rotating rods 6 of different rotation angles, and the other structures of the linkage devices are the same. It is qualified if the strokes of the first lock rod 2 and the second lock rod 3 enable locking to be completed, otherwise it is unqualified. A larger rotation angle means larger strokes of the first lock rod 2 and the second lock rod 3, and accordingly, which correspondingly requires an increase in the size of each connecting parts, thus easily leading to a touch with other components in the linkage device and affects the use of the linkage device, so that the rotation angle of the rotating rod 6 in this case is also considered unqualified. The test results are shown in Table 6.

**Table 6: Influence of different rotation angles of the rotating rod on the function of the linkage device and the touch with other components**

| | | | | | | | | | | | | | |
|---|---|---|---|---|---|---|---|---|---|---|---|---|---|
| Rotation angle | 14 | 15 | 28 | 36 | 47 | 55 | 61 | 70 | 78 | 83 | 89 | 92 | 93 |
| Whether locked | No | Yes | Yes | Yes | Yes | Yes | Yes | Yes | Yes | Yes | Yes | Yes | Yes |
| Whether touched | No | No | No | No | No | No | No | No | No | No | No | No | Yes |

As can be seen from Table 6, when the rotation angle of the rotating rod 6 is less than 15°, the strokes of the first lock rod 2 and the second lock rod 3 are not enough, and the locking cannot be completed. When the rotation angle of the rotating rod 6 is greater than 92°, there will be unnecessary contact between the components of the linkage device, which is also unqualified. Therefore, the inventor selects the rotation angle of the output end of the rotating rod 6 to be 15° to 92°. Specifically, the rotation angle may be 50°, 60°, 70°, or 80°.

Further, the rotating rod is made of a material including metal or non-metal.

Further, the rotating rod is made of a material including carbon steel, mere copper, pure copper, aluminum-clad zinc, aluminum-clad copper or zinc alloy. These metals or alloys have better strength and toughness, which can better meet the needs of the rotating rod.

Further, the rotating rod is made of a material including one or more selected from the group consisting of polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, crosslinked polyolefin, ethylene/vinyl acetate copolymer, crosslinked polyethylene, polycarbonate, polysulfone, polyphenylene oxide, polyester, phenolic resin, urea-formaldehyde, styrene-acrylonitrile copolymer, polymethacrylate, and polyformaldehyde resin.

Taking polyformaldehyde, polyester, polycarbonate, polyamide, polyphenylene sulfide and polytetrafluoroethylene as examples: polyformaldehyde is a hard and dense material with a smooth and shiny surface, and is yellowish or white in color and can be used for a long time in a temperature range of -40°C to 100°C. Polyformaldehyde has a wear resistance and a self-lubrication superior to those of most engineering plastics, and also has good oil resistance and peroxide resistance.

Polyester is generally made of terephthalic acid and butanediol, and has chain segments including a hard segment and a soft segment, and polyester is a thermoplastic elastomer.

Polycarbonate has high strength and elastic coefficient, high impact strength, good fatigue resistance, good dimensional stability, small creep, high transparency and free chromaticity.

Polyamide is nontoxic and light, with an excellent mechanical strength and good wear resistance and corrosion resistance, and is widely used to replace metals such as copper.

Polyphenylene sulfide is a new high-performance thermoplastic resin, which has the advantages of high mechanical strength, high temperature resistance, chemical resistance, flame retardancy, good thermal stability and excellent electrical properties.

Polytetrafluoroethylene has the characteristics of acid resistance, alkali resistance and resistances to various organic solvents, and is almost insoluble in any solvent. Meanwhile, polytetrafluoroethylene has the characteristic of high temperature resistance.

The rotating rod is made of a material including glass fiber.

The first lock rod 2 and the second lock rod 3 are made of a material including one or more selected from the group consisting of polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, crosslinked polyolefin, ethylene/vinyl acetate copolymer, crosslinked polyethylene, polycarbonate, polysulfone, polyphenylene oxide, polyester, phenolic resin, urea-formaldehyde, styrene-acrylonitrile copolymer, polymethacrylate, and polyformaldehyde resin.

Taking polyformaldehyde, polycarbonate and polyamide as an example: polycarbonate is colorless, transparent, heat-resistant and impact-resistant with a flame-retardant grade BI, and has good mechanical properties under an ordinary use temperature. Compared with polymethyl methacrylate with similar properties, polycarbonate has a better impact resistance, a higher refractive index and a better processability, and achieves a very high flame retardant performance without additives.

Polyamide is nontoxic and light, with an excellent mechanical strength and good wear resistance and corrosion resistance. Polyamide is widely used to replace metals such as copper to manufacture parts such as bearings, gears and pump blades in the industries of machinery, chemicals, instruments, automobiles or the like. The first lock rod 2 and the second lock rod 3 requires characteristics such as high strength, high temperature resistance and high wear resistance. Therefore, polycarbonate or polyamide is the first choice for material of the first lock rod 2 and the second lock rod 3.

The chute 52 is provided with a wear-resistant plating layer.

Further, the wear-resistant plating layer is made of a material comprising ceramic, an alloy, an oxide or fluoroplastic.

Exemplarily, the wear-resistant plating layer includes one or more selected from the group consisting of gold, silver, nickel, tin, tin-lead alloy, zinc, silver-antimony alloy, palladium, palladium-nickel alloy, graphite silver, hard silver, graphene silver and silver-gold-zirconium alloy.

The test on the corrosion resistance time in Table 7 below is to put the chute 52 into a salt spray test chamber, spray salt fog on each position of the chute 52, take out and clean the chute 52 every 20 hours to observe the surface corrosion thereof, which is a cycle, stop the test when a corrosion area of the surface of the chute 52 is more than 10% of a total area thereof, and then record the number of cycles at that time. In this embodiment, the number of cycles less than 80 is unqualified.

The number of times of plugging and unplugging in Table 7 is obtained as follows: the chute 52 is fixed on an experimental platform; after every 100 times of plugging and unplugging, it is necessary to stop and observe the damage of the wear-resistant plating layer of the chute 52; if the wear-resistant plating layer is scraped and the material of the chute 52 is exposed, the test is stopped and the number of times of plugging and unplugging at that time is recorded. In this embodiment, the number of times of plugging and unplugging less than 8000 is unqualified.

**Table 7: Influence of different materials of the plating layer on the number of times of plugging and unplugging of the chute and on the corrosion resistance**

| Different materials of the wear-resistant plating layer | | | | | | | | | | | | |
|---|---|---|---|---|---|---|---|---|---|---|---|---|
| Hard silver | Gold | Silver | Nickel | Tin | Tin-lead alloy | Zinc | Silver-antimony alloy | Palladium | Palladiu m-nickel alloy | Graphite silver | Graphen e silver | Silver-gold-zirconium alloy |
| Number of times of plugging and unplugging | | | | | | | | | | | | |
| 12800 | 12500 | 11800 | 9500 | 9200 | 9800 | 9500 | 12200 | 12100 | 12200 | 12500 | 12000 | 10000 |

| Number of cycles of corrosion resistance tests | | | | | | | | | | | | |
|---|---|---|---|---|---|---|---|---|---|---|---|---|
| 133 | 135 | 120 | 92 | 88 | 89 | 95 | 126 | 118 | 121 | 129 | 130 | 133 |

As can be seen from Table 7, when the plating layer is made of gold, silver, silver-antimony alloy, palladium, palladium-nickel alloy, graphite silver, hard silver, graphene silver or silver-gold-zirconium alloy, the test result is much better than the standard value, and the performance is stable. When the plating layer is made of nickel, tin, tin-lead alloy or zinc, the test result also meets the requirement. Therefore, the inventor selects that the plating layer is made of a material selected from one or more of gold, silver, nickel, tin, tin-lead alloy, zinc, hard silver, silver-antimony alloy, palladium, palladium-nickel alloy, graphite silver, graphene silver and silver-gold-zirconium alloy.

The embodiments of a second aspect of the present disclosure provide an electric automobile charging socket, including the electronic lock (as illustrated in FIG. 1) according to the embodiments of the first aspect, and one of the first lock rod 2 and the second lock rod 3 is used for locking a DC charging gun and the other is used for locking an AC charging gun. The electronic lock has the same structure, working principle and advantageous effect as that according to the embodiments of the first aspect, which will not be repeated here.

The embodiments of a third aspect of the present disclosure provide a motor vehicle, including the electronic lock according to the embodiments of the first aspect. The electronic lock has the same structure, working principle and advantageous effect as that according to the embodiments of the first aspect, which will not be repeated here.

## Claims

1. An electronic lock, comprising:
a driving device (1) configured to generate a rotational movement;
a first lock rod (2) connected to the driving device (1) through a first transmission mechanism, the first transmission mechanism (4) being configured to convert the rotational movement of the driving device (1) into a movement of the first lock rod (2); and
a second lock rod (3) connected to the driving device (1) through a second transmission mechanism (5), the second transmission mechanism (5) being configured to convert the rotational movement of the driving device (1) into a movement of the second lock rod (3);
wherein the electronic lock further comprises a rotating rod (6) connected to the driving device (1), the first transmission mechanism (4) and the second transmission mechanism (5), respectively, so as to transmit the rotational movement of the driving device (1) to the first transmission mechanism (4) and the second transmission mechanism (5);
**characterized in that** two ends of the rotating rod (6) are connected to the first transmission mechanism (4) and the second transmission mechanism (5) respectively, and a portion of the rotating rod (6) between the two ends thereof is connected to the driving device (1);
the rotating rod (6), the first lock rod (2), and the second lock rod (3) are perpendicular to each other; and
the rotating rod (6) has a rotation angle of 15° to 92°.

2. The electronic lock according to claim 1, wherein the movement of the first lock rod (2) is in the form of telescoping, translation, rotation, swinging, bending or twisting; or
the movement of the second lock rod (3) is in the form of telescoping, translation, rotation, swinging, bending or twisting.

3. The electronic lock according to claim 1, wherein the first lock rod (2) and the second lock rod (3) are used to be plugged with keyholes of a charging gun to fix the charging gun.

4. The electronic lock according to claim 1, wherein the first lock rod (2) has a length of 5 mm to 55 mm, and the second lock rod (3) has a length of 5 mm to 55 mm; or
the first lock rod (2) has a stroke of 5 mm to 36 mm, and the second lock rod (3) has a stroke of 5 mm to 36 mm.

5. The electronic lock according to claim 1, wherein the first transmission mechanism (4) is a rack-and-pinion mechanism, a link mechanism, a cam mechanism or a crank-slider mechanism; or
the second transmission mechanism (5) is a rack-and-pinion mechanism, a link mechanism, a cam mechanism or a crank-slider mechanism.

6. The electronic lock according to claim 1, further comprising a reduction mechanism (7), through which the rotating rod (6) is connected to the driving device (1);
preferably wherein
the reduction mechanism (7) is a two-stage reduction mechanism which comprises:
a first worm (71) connected to an output shaft of the driving device (1);
a first gear (72) meshed with the first worm (71);
a second worm (73) connected to an output shaft of the first gear (72); and
a second gear (74) meshed with the second worm (73) and coaxially connected to the rotating rod (6).

7. The electronic lock according to claim 1, wherein the first transmission mechanism(4) is a rack-and-pinion mechanism, which comprises a driving gear (41) and a driven rack (42) meshed with each other; the driven rack (42) is connected to the first lock rod (2), the rotating rod (6) transmits the rotational movement of the driving device (1) to the driving gear (41), and the driving gear (41) drives the driven rack (42) by rotating to drive the first lock rod (2) to make a linear movement;
preferably wherein
the rack-and-pinion mechanism is connected to the rotating rod (6) through a reversing assembly (8) which comprises:
a first reversing gear (81) coaxially connected to the rotating rod (6); and
a second reversing gear (82) perpendicular to and meshed with the first reversing gear (81), the second reversing gear (82) being coaxially connected to the driving gear (41) through a link (83), and the link (83), the rotating rod (6) and the first lock rod (2) being perpendicular to each other.

8. The electronic lock according to claim 1, wherein the second transmission mechanism (5) is a cam mechanism, which comprises a cam (51) fixed on the rotating rod (6) and a chute (52) disposed on the second lock rod (3), the cam (51) is located in the chute (52), inner wall surfaces of the chute (52) are configured as a slideway with a preset shape and in sliding contact with an outer contour of the cam (51), the rotating rod transmits the rotational movement of the driving device to the cam, and the cam is in sliding fit with the slideway by gyration to urge the second lock rod (3) to make a linear movement.

9. The electronic lock according to claim 8, wherein the slideway comprises two planes, which are located on opposite sides of the cam (51) in a linear movement direction of the second lock rod, and are perpendicular to the linear movement direction of the second lock rod (3), respectively;
preferably wherein
the preset shape is a U-shape, a rectangle, a parallelogram, a polygon, a trapezoid, a rhombus, or an oblong shape.

10. The electronic lock according to claim 1, wherein the electronic lock comprises a housing having a first guide hole disposed along a movement direction of the first lock rod (2) and a second guide hole disposed along a movement direction of the second lock rod (3), the first lock rod (2) passing through the first guide hole, and the second lock rod (3) passing through the second guide hole.

11. The electronic lock according to claim 1, wherein the driving device (1) is an electric motor; or
the driving device (1) has an output power of 0.35 W to 5.56 W; or
the driving device (1) comprises an output shaft which has an output torque of 2.25 N·mm to 9.85 N·mm.

12. An electric automobile charging socket, comprising the electronic lock according to any one of claims 1 to 11, wherein one of the first lock rod (2) and the second lock rod (3) is used for locking a DC charging gun and the other is used for locking an AC charging gun.

13. A motor vehicle, comprising the electronic lock according to any one of claims 1 to 12.

## Patentansprüche

1. Elektronisches Schloss, umfassend:
eine Antriebsvorrichtung (1), welche dazu eingerichtet ist, eine Drehbewegung zu erzeugen;
eine erste Schlossstange (2), welche durch einen ersten Übertragungsmechanismus mit der Antriebsvorrichtung (1) verbunden ist, wobei der erste Übertragungsmechanismus (4) dazu eingerichtet ist, die Drehbewegung der Antriebsvorrichtung (1) in eine Bewegung der ersten Schlossstange (2) umzuwandeln; und
eine zweite Schlossstange (3), welche durch einen zweiten Übertragungsmechanismus (5) mit der Antriebsvorrichtung (1) verbunden ist, wobei der zweite Übertragungsmechanismus (5) dazu eingerichtet ist, die Drehbewegung der Antriebsvorrichtung (1) in eine Bewegung der zweiten Schlossstange (3) umzuwandeln;
wobei das elektronische Schloss ferner eine Drehstange (6) umfasst, welche mit der Antriebsvorrichtung (1), dem ersten Übertragungsmechanismus (4) bzw. dem zweiten Übertragungsmechanismus (5) verbunden ist, um die Drehbewegung der Antriebsvorrichtung (1) auf den ersten Übertragungsmechanismus (4) und den zweiten Übertragungsmechanismus (5) zu übertragen;
**dadurch gekennzeichnet, dass**
zwei Enden der Drehstange (6) mit dem ersten Übertragungsmechanismus (4) bzw. dem zweiten Übertragungsmechanismus (5) verbunden sind und ein Abschnitt der Drehstange (6) zwischen den beiden Enden davon mit der Antriebsvorrichtung (1) verbunden ist;
die Drehstange (6), die erste Schlossstange (2) und die zweite Schlossstange (3) senkrecht zueinander sind; und
die Drehstange (6) einen Drehwinkel von 15° bis 92° aufweist.

2. Elektronisches Schloss nach Anspruch 1, wobei die Bewegung der ersten Schlossstange (2) in der Form einer Teleskopierung, einer Translation, einer Drehung, eines Schwenkens, eines Biegens oder eines Verdrehens erfolgt; oder
die Bewegung der zweiten Schlossstange (3) in der Form einer Teleskopierung, einer Translation, einer Drehung, eines Schwenkens, eines Biegens oder eines Verdrehens erfolgt.

3. Elektronisches Schloss mach Anspruch 1, wobei die erste Schlossstange (2) und die zweite Schlossstange (3) dazu verwendet werden, in Schlüssellöcher einer Ladepistole gesteckt zu sein, um die Ladepistole zu fixieren.

4. Elektronisches Schloss mach Anspruch 1, wobei die erste Schlossstange (2) eine Länge von 5 mm bis 55 mm aufweist und die zweite Schlossstange (3) eine Länge von 5 mm bis 55 mm aufweist; oder
die erste Schlossstange (2) einen Hub von 5 mm bis 36 mm aufweist und die zweite Schlossstange (3) einen Hub von 5 mm bis 36 mm aufweist.

5. Elektronisches Schloss mach Anspruch 1, wobei der erste Übertragungsmechanismus (4) ein Zahnstangen-Ritzel-Mechanismus, ein Gestängemechanismus, ein Nockenmechanismus oder ein Kurbelgleitmechanismus ist; oder
der zweite Übertragungsmechanismus (5) ein Zahnstangen-Ritzel-Mechanismus, ein Gestängemechanismus, ein Nockenmechanismus oder ein Kurbelgleitmechanismus ist.

6. Elektronisches Schloss mach Anspruch 1, ferner umfassend einen Untersetzungsmechanismus (7), durch welchen die Drehstange (6) mit der Antriebsvorrichtung (1) verbunden ist;
vorzugsweise wobei
der Untersetzungsmechanismus (7) ein zweistufiger Untersetzungsmechanismus ist, welcher umfasst:
eine erste Schnecke (71), welche mit einer Abtriebswelle der Antriebsvorrichtung (1) verbunden ist;
ein erstes Zahnrad (72), welches mit der ersten Schnecke (71) kämmt;
eine zweite Schnecke (73), welche mit einer Abtriebswelle des ersten Zahnrads (72) verbunden ist; und
ein zweites Zahnrad (74), welches mit der zweiten Schnecke (73) kämmt und koaxial mit der Drehstange (6) verbunden ist.

7. Elektronisches Schloss mach Anspruch 1, wobei der erste Übertragungsmechanismus (4) ein Zahnstangen-Ritzel-Mechanismus ist, welcher ein Antriebszahnrad (41) und ein angetriebenes Ritzel (42) umfasst, welche miteinander kämmen; wobei das angetriebene Ritzel (42) mit der ersten Schlossstange (2) verbunden ist, die Drehstange (6) die Drehbewegung der Antriebsvorrichtung (1) auf das Antriebszahnrad (41) überträgt und das Antriebszahnrad (41) durch ein Drehen das angetriebene Ritzel (42) antreibt, um die erste Schlossstange derart (2) anzutreiben, dass sie eine lineare Bewegung vollzieht;
vorzugsweise wobei
der Zahnstangen-Ritzel-Mechanismus mit der Zahnstange (6) durch eine Umkehranordnung (8) verbunden ist, welche umfasst:
ein erstes Umkehrzahnrad (81), welches koaxial mit der Drehstange (6) verbunden ist; und
ein zweites Umkehrzahnrad (82), welches senkrecht zu dem ersten Umkehrzahnrad (81) ist und damit kämmt, wobei das zweite Umkehrzahnrad (82) durch ein Gestänge (83) koaxial mit dem Antriebszahnrad (41) verbunden ist und das Gestänge (83), die Drehstange (6) und die erste Schlossstange (2) senkrecht zueinander sind.

8. Elektronisches Schloss mach Anspruch 1, wobei der zweite Übertragungsmechanismus (5) ein Nockenmechanismus ist, welcher einen Nocken (51), der an der Drehstange (6) fixiert ist, und eine Rutsche (52) umfasst, die an der zweiten Schlossstange (3) angeordnet ist, sich der Nocken (51) in der Rutsche (52) befindet, innere Wandflächen der Rutsche (52) als eine Gleitbahn mit einer vorgegebenen Form und in Gleitkontakt mit einer äußeren Kontur des Nockens (51) eingerichtet sind, die Drehstange die Drehbewegung der Antriebsvorrichtung auf den Nocken überträgt und der Nocken durch eine Kreisbewegung in einer Gleitpassung mit der Gleitbahn ist, um die zweite Schlossstange (3) dazu zu drängen, eine lineare Bewegung zu vollziehen.

9. Elektronisches Schloss mach Anspruch 8, wobei die Gleitbahn zwei Ebenen umfasst, welche sich in einer linearen Bewegungsrichtung der zweiten Schlossstange an entgegengesetzten Seiten des Nockens (51) befinden und jeweils senkrecht zu der linearen Bewegungsrichtung der zweiten Schlossstange (3) sind;
vorzugsweise wobei
die vorgegebene Form eine U-Form, ein Rechteck, ein Parallelogramm, ein Polygon, ein Trapez, eine Raute oder eine längliche Form ist.

10. Elektronisches Schloss mach Anspruch 1, wobei das elektronische Schloss ein Gehäuse umfasst, welches ein erstes Führungsloch, das entlang einer Bewegungsrichtung der ersten Schlossstange (2) angeordnet ist, und ein zweites Führungsloch aufweist, das entlang einer Bewegungsrichtung der zweiten Schlossstange (3) angeordnet ist, wobei die erste Schlossstange (2) durch das erste Führungsloch verläuft und die zweite Schlossstange (3) durch das zweite Führungsloch verläuft.

11. Elektronisches Schloss mach Anspruch 1, wobei die Antriebsvorrichtung (1) ein Elektromotor ist; oder
die Antriebsvorrichtung (1) eine Ausgangsleistung von 0,35 W bis 5,56 W aufweist; oder
die Antriebsvorrichtung (1) eine Abtriebswelle umfasst, welche ein Abtriebsdrehmoment von 2,25 N·mm bis 9,85 N·mm aufweist.

12. Elektro-Automobil-Ladebuchse, umfassend das elektronische Schloss nach einem der Ansprüche 1 bis 11, wobei eine aus der ersten Schlossstange (2) und der zweiten Schlossstange (3) zum Verriegeln einer DC-Ladepistole verwendet wird und die andere zum Verriegeln einer AC-Ladepistole verwendet wird.

13. Motorfahrzeug, umfassend das elektronische Schloss nach einem der Ansprüche 1 bis 12.

## Revendications

1. Verrou électronique, comprenant :
un dispositif d'entraînement (1) configuré pour générer un mouvement de rotation ;
une première tige de verrouillage (2) connectée au dispositif d'entraînement (1) par l'intermédiaire d'un premier mécanisme de transmission, le premier mécanisme de transmission (4) étant configuré pour convertir le mouvement de rotation du dispositif d'entraînement (1) en un mouvement de la première tige de verrouillage (2) ; et
une seconde tige de verrouillage (3) connectée au dispositif d'entraînement (1) par l'intermédiaire d'un second mécanisme de transmission (5), le second mécanisme de transmission (5) étant configuré pour convertir le mouvement de rotation du dispositif d'entraînement (1) en un mouvement de la seconde tige de verrouillage (3) ;
dans lequel le verrou électronique comprend en outre une tige rotative (6) connectée au dispositif d'entraînement (1), au premier mécanisme de transmission (4) et au second mécanisme de transmission (5), respectivement, de manière à transmettre le mouvement de rotation du dispositif d'entraînement (1) au premier mécanisme de transmission (4) et au second mécanisme de transmission (5) ;
**caractérisé en ce que**
deux extrémités de la tige rotative (6) sont connectées au premier mécanisme de transmission (4) et au second mécanisme de transmission (5) respectivement, et une partie de la tige rotative (6) entre les deux extrémités de celle-ci est connectée au dispositif d'entraînement (1) ;
la tige rotative (6), la première tige de verrouillage (2) et la seconde tige de verrouillage (3) sont perpendiculaires les unes par rapport aux autres ; et
la tige rotative (6) présente un angle de rotation de 15° à 92°.

2. Verrou électronique selon la revendication 1, dans lequel le mouvement de la première tige de verrouillage (2) est sous la forme d'un mouvement télescopique, d'une translation, d'une rotation, d'un balancement, d'une flexion ou d'une torsion ; ou
le déplacement de la seconde tige de verrouillage (3) se présente sous la forme d'un mouvement télescopique, d'une translation, d'une rotation, d'une balancement, d'une flexion ou d'une torsion.

3. Verrou électronique selon la revendication 1, dans lequel la première tige de verrouillage (2) et la seconde tige de verrouillage (3) sont utilisées pour être bouchées avec des trous de serrure d'un pistolet de charge pour fixer le pistolet de charge.

4. Verrou électronique selon la revendication 1, dans lequel la première tige de verrouillage (2) présente une longueur de 5 mm à 55 mm, et la seconde tige de verrouillage (3) présente une longueur de 5 mm à 55 mm ; ou
la première tige de verrouillage (2) présente une course de 5 mm à 36 mm, et la seconde tige de verrouillage (3) présente une course de 5 mm à 36 mm.

5. Verrou électronique selon la revendication 1, dans lequel le premier mécanisme de transmission (4) est un mécanisme à crémaillère, un mécanisme de liaison, un mécanisme à came ou un mécanisme à coulisseau-manivelle ; ou
le second mécanisme de transmission (5) est un mécanisme à crémaillère, un mécanisme de liaison, un mécanisme à came ou un mécanisme à coulisseau-manivelle.

6. Verrou électronique selon la revendication 1, comprenant en outre un mécanisme de réduction (7), par l'intermédiaire duquel la tige rotative (6) est connectée au dispositif d'entraînement (1) ;
de préférence dans lequel
le mécanisme de réduction (7) est un mécanisme de réduction à deux étages qui comprend :
une première vis sans fin (71) connectée à un arbre de sortie du dispositif d'entraînement (1) ;
un premier engrenage (72) en engrènement avec la première vis sans fin (71) ;
une seconde vis sans fin (73) connectée à un arbre de sortie du premier engrenage (72) ; et
un second engrenage (74) en engrènement avec la seconde vis sans fin (73) et connecté coaxialement à la tige rotative (6).

7. Verrou électronique selon la revendication 1, dans lequel le premier mécanisme de transmission (4) est un mécanisme à crémaillère, qui comprend un engrenage d'entraînement (41) et une crémaillère entraînée (42) en engrènement l'un avec l'autre ;
la crémaillère entraînée (42) est connectée à la première tige de verrouillage (2), la tige rotative (6) transmet le mouvement de rotation du dispositif d'entraînement (1) à l'engrenage d'entraînement (41), et l'engrenage d'entraînement (41) entraîne la crémaillère entraînée (42) en rotation pour entraîner la première tige de verrouillage (2) à effectuer un mouvement linéaire ;
de préférence dans lequel
le mécanisme à crémaillère est connecté à la tige rotative (6) par l'intermédiaire d'un ensemble d'inversion (8) qui comprend :
un premier engrenage d'inversion (81) connecté coaxialement à la tige rotative (6) ; et
un second engrenage d'inversion (82) perpendiculaire au premier engrenage d'inversion (81) et en engrènement avec celui-ci, le second engrenage d'inversion (82) étant connecté de manière coaxiale à l'engrenage d'entraînement (41) par l'intermédiaire d'une liaison (83), et la liaison (83), la tige rotative (6) et la première tige de verrouillage (2) étant perpendiculaires les unes par rapport aux autres.

8. Verrou électronique selon la revendication 1, dans lequel le second mécanisme de transmission (5) est un mécanisme à came, qui comprend une came (51) fixée sur la tige rotative (6) et une goulotte (52) disposée sur la seconde tige de verrouillage (3), la came (51) est située dans la goulotte (52), les surfaces de paroi intérieure de la goulotte (52) sont configurées comme une glissière avec une forme prédéfinie et en contact coulissant avec un contour extérieur de la came (51), la tige rotative transmet le déplacement de rotation du dispositif d'entraînement à la came, et la came est en ajustement coulissant avec la glissière par giration pour pousser la seconde tige de verrouillage (3) à effectuer un mouvement linéaire.

9. Verrou électronique selon la revendication 8, dans lequel la glissière comprend deux plans, qui sont situés sur des côtés opposés de la came (51) dans une direction de mouvement linéaire de la seconde tige de verrouillage, et sont perpendiculaires à la direction de mouvement linéaire de la seconde tige de verrouillage (3), respectivement ;
de préférence dans lequel
la forme prédéfinie est une forme en U, un rectangle, un parallélogramme, un polygone, un trapèze, un losange ou une forme oblongue.

10. Verrou électronique selon la revendication 1, dans lequel le verrou électronique comprend un boîtier présentant un premier trou de guidage disposé le long d'une direction de mouvement de la première tige de verrouillage (2) et un second trou de guidage disposé le long d'une direction de mouvement de la seconde tige de verrouillage (3), la première tige de verrouillage (2) passant à travers le premier trou de guidage, et la seconde tige de verrouillage (3) passant à travers le second trou de guidage.

11. Verrou électronique selon la revendication 1, dans lequel le dispositif d'entraînement (1) est un moteur électrique ; ou
le dispositif d'entraînement (1) présente une puissance de sortie de 0,35 W à 5,56 W ; ou
le dispositif d'entraînement (1) comprend un arbre de sortie qui présente un couple de sortie de 2,25 N.mm à 9,85 N.mm.

12. Prise de charge de véhicule électrique, comprenant le verrou électronique selon l'une quelconque des revendications 1 à 11, dans laquelle l'une de la première tige de verrouillage (2) et de la seconde tige de verrouillage (3) est utilisée pour verrouiller un pistolet de charge à courant continu, CC, et l'autre est utilisée pour verrouiller un pistolet de charge à courant alternatif, CA.

13. Véhicule à moteur, comprenant le verrou électronique selon l'une quelconque des revendications 1 à 12.
